# FASCICULE DE BREVET EUROPEEN

(11) **EP 2 913 741 B1**
(45) Date de publication et mention de la délivrance du brevet: **10.06.2020**
(21) Numéro de dépôt: 15156691.6
(22) Date de dépôt: 26.02.2015
(51) Int. Cl.: G06F 3/01, G06F 21/31

(54) **PROCÉDÉ DE CONTRÔLE D'ACCÈS PAR RETOUR HAPTIQUE**
VERFAHREN ZUR ZUTRITTSKONTROLLE MITHILFE HAPTISCHER RÜCKKOPPLUNG
METHOD FOR ACCESS CONTROL USING HAPTIC FEEDBACK

(30) Priorité: 28.02.2014 FR 1451619
(43) Date de publication de la demande: 02.09.2015
(73) Titulaire: Orange, 75015 Paris (FR)
(72) Inventeur: Masson, Cécile, 38000 Grenoble (FR); Perez-Segovia, Tomas, 38400 Saint Martin D'Heres (FR); Zijp-Rouzier, Sophie, 38700 La Tronche (FR); Lefebvre, Grégoire, 38920 Crolles (FR)

(56) Documents cités:
- WO-A1-2007/096648
- GB-A- 2 476 822
- US-A1- 2012 276 871
- US-A1- 2013 069 772

## Description

### DOMAINE TECHNIQUE

La présente invention se rapporte à la sécurité des accès et concerne en particulier un procédé de contrôle d'accès par retour haptique.

### ART ANTÉRIEUR

L'adoption massive d'équipements mobiles de plus en plus sophistiqués - smartphones et tablettes - induit une évolution marquée des usages. Les smartphones notamment poursuivent leur conquête des utilisateurs de téléphone mobile, alors que les tablettes introduisent de nouveaux usages à la maison et concurrencent de plus en plus le traditionnel PC.

Les utilisateurs stockent sur ces terminaux une grande quantité de données personnelles, comme par exemple des photos, des emails, ou encore les coordonnées de différents contacts. Afin de protéger ces données, un tel terminal peut être verrouillé de façon à ce que les données qu'il contient ne soient pas accessibles à des tiers non autorisés. Le verrouillage du terminal peut être activé suite à une action d'un utilisateur sur un bouton par exemple, ou encore après un certain temps d'inactivité. Lorsqu'il est verrouillé, les fonctionnalités du terminal sont généralement restreintes. Ainsi, pour profiter pleinement des fonctionnalités du terminal et accéder aux données qu'il renferme, un utilisateur devra exécuter correctement une procédure de contrôle d'accès, dite procédure de déverrouillage.

Selon une première méthode de déverrouillage, l'utilisateur est invité à saisir un mot de passe en utilisant par exemple des touches virtuelles représentées sur l'écran tactile du terminal. Lorsque le mot de passe est saisi correctement, le terminal est déverrouillé et toutes ses fonctionnalités deviennent accessibles.

Selon une autre méthode de déverrouillage, l'utilisateur est invité à reproduire un motif préenregistré en déplaçant son doigt sur une grille comportant un certain nombre de cases. Si le motif dessiné sur la grille correspond à un motif enregistré préalablement par l'utilisateur, le terminal est déverrouillé et toutes ses fonctionnalités deviennent accessibles. En variante le brevet US 8504842 B1 « Alternative unlocking patterns » prévoit qu'un motif particulier puisse être associé à une fonctionnalité particulière du terminal.

Certains terminaux équipés d'une caméra frontale permettent un déverrouillage par reconnaissance faciale. Ainsi, le terminal capture une image de l'utilisateur et la compare avec une image préenregistrée d'un utilisateur autorisé. Lorsque les visages correspondent, le terminal est déverrouillé.

Le document US 2013/0113723 A1 décrit une méthode de déverrouillage invitant l'utilisateur à effectuer une action simultanée à différents emplacements prédéfinis sur l'écran. Par exemple, le terminal affiche une grille sur laquelle l'utilisateur doit positionner ses doigts. Le terminal est déverrouillé lorsque les doigts sont correctement apposés sur les emplacements préenregistrés.

Ces méthodes permettent de sécuriser l'accès au terminal mais présentent l'inconvénient d'être facilement imitables. Par exemple, lorsqu'un tiers observe un utilisateur exécuter une procédure de déverrouillage selon l'état de l'art, il peut facilement reproduire le mot de passe ou le motif pour accéder au terminal. On peut également noter qu'il est facile de tromper un système de déverrouillage par reconnaissance faciale à l'aide d'une photographie.

La demande de brevet US 2012/276871 A1 divulgue un procédé permettant le déverrouillage d'un terminal mobile en associant des codes et des signaux haptiques tels que des vibrations. Ce procédé présente un inconvénient car les vibrations sont propagées sur l'ensemble du terminal et lorsque celui-ci est par exemple posé sur une table, les vibrations deviennent audibles par un tiers à proximité.

Il existe donc un réel besoin pour un système de contrôle d'accès qui ne soit pas facilement imitable par un observateur tiers ayant vu un utilisateur exécuter correctement la procédure.

### EXPOSÉ DE L'INVENTION

La présente invention améliore la situation.

À cet effet, l'invention concerne selon un premier aspect un procédé de contrôle d'accès tel que défini dans la revendication 1.

L'invention propose ainsi de transmettre des sensations tactiles à l'utilisateur au moyen d'un dispositif de retour haptique lié à l'équipement, le dispositif de retour haptique étant apte à restituer au moins un signal haptique préenregistré. Le signal haptique ainsi restitué est perçu par l'utilisateur sous la forme d'une sensation tactile, et peut par exemple correspondre au rendu d'une texture au niveau la peau de l'utilisateur, à la transmission de vibrations, de picotements, ou encore de chaleur. Dans la suite de ce document, nous considérerons, de façon non limitative, que le retour haptique est réalisé par un rendu de texture sur une surface de restitution haptique. Toutefois, nous attirons l'attention du lecteur sur le fait que tout type de retour haptique apte à transmettre une sensation tactile à l'utilisateur peut être utilisé dans le cadre de la présente l'invention.

Il est ainsi possible de contrôler l'accès à un équipement en vérifiant que le geste effectué par l'utilisateur en réponse au signal haptique présenté correspond bien à un geste associé au préalable, par exemple lors d'une première prise en main de l'équipement. Contrairement à l'art antérieur, un tiers ayant observé l'utilisateur exécuter la procédure de contrôle d'accès sera dans l'incapacité de la reproduire, car seul l'utilisateur manipulant l'équipement peut ressentir et identifier le signal haptique présenté et effectuer en réponse le geste correspondant. D'autre part, la procédure de contrôle d'accès selon l'invention ne nécessite pas de contrôle visuel. Un équipement mettant en œuvre l'invention présente donc l'avantage d'être accessible à tous, en particulier à des personnes malvoyantes, et dans toutes les situations, en particulier en situation d'usage avec faible contrôle visuel, comme par exemple pendant la marche.

Selon l'invention,, le procédé est tel que les étapes de restitution, détection, et de validation sont répétées pour une séquence de signaux haptiques, et que l'étape d'autorisation de l'accès suite à la validation dudit geste est déclenchée suite à la validation du geste de réponse au dernier signal haptique de la séquence.

Le fait de restituer successivement plusieurs signaux haptiques et de valider chacune des réponses de l'utilisateur à ces signaux avant d'octroyer un accès au terminal permet de renforcer la sécurité en augmentant le nombre de combinaisons possibles. Par exemple, en considérant une séquence composée par la présentation successive de cinq signaux haptiques, et si pour chacun de ces signaux le geste de réponse correspond à un geste parmi huit gestes prédéfinis (par exemple un déplacement rectiligne du doigt vers le haut, bas, gauche, droite ou selon les diagonales), il existe 32768 combinaisons possibles.

Enfin, l'étape d'autorisation d'accès n'intervient qu'après la validation du geste en réponse au dernier signal haptique restitué. Ceci a pour effet de rendre particulièrement difficile d'éventuelles tentatives de découverte des gestes associés aux signaux haptiques par essais successifs.

Dans un mode particulier de réalisation, le procédé est tel que le geste associé au signal haptique est un déplacement rectiligne d'un contact avec une surface tactile de l'équipement dans une direction prédéfinie.

L'utilisateur peut ainsi répondre au signal haptique ressenti par un geste simple sur une surface tactile dans une direction définie au préalable pour ce signal. Le fait d'associer un geste simple facilite d'une part sa mémorisation par l'utilisateur et permet d'autre part d'obtenir une séquence de déverrouillage rapide avec un faible taux d'erreur. La surface tactile peut ou non être combinée aux moyens de restitution haptique.

Selon une réalisation particulière, le procédé est tel qu'un indice visuel représentatif du signal haptique restitué est affiché sur un écran de l'équipement.

L'utilisateur dispose ainsi d'un moyen d'identification visuel du signal haptique restitué, autorisant par exemple un déverrouillage du terminal lorsque la situation ne permet pas une reconnaissance du signal par le toucher, comme par exemple dans le cas d'une manipulation d'un équipement muni d'une surface tactile avec des gants. Si par exemple le signal haptique est une texture composées de sillons verticaux, l'indice visuel peut être un symbole représentant des lignes verticales.

L'invention concerne également un dispositif de contrôle d'accès tel que défini dans la revendication 4.

Selon un mode de réalisation particulier, le dispositif de contrôle d'accès est tel qu'il comprend lesdits moyens de restitution d'au moins un signal haptique et des moyens de détection d'un geste de réponse audit signal.

L'invention concerne également un terminal comprenant un dispositif de contrôle d'accès tel que décrit ci-dessus.

L'invention concerne aussi un programme d'ordinateur comportant des instructions pour l'exécution du procédé de contrôle d'accès tel que décrit ci-dessus, lorsque le programme est exécuté par un processeur.

L'invention concerne aussi un support de stockage lisible par un processeur sur lequel est enregistré un programme d'ordinateur comprenant des instructions pour l'exécution des étapes du procédé de contrôle d'accès.

Les terminaux, dispositifs, programmes et supports de stockage présentent des avantages analogues à ceux du procédé décrit ci-dessus.

### DESCRIPTION DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre des exemples d'associations entre des signaux haptiques et des gestes pour contrôler l'accès à un terminal selon un mode de réalisation de la présente invention ;
- La figure 2 illustre les principales étapes du procédé de contrôle d'accès selon un mode de réalisation de la présente invention ;
- Les figures 3a, 3b, 3c et 3d illustrent une procédure de contrôle d'accès à un terminal selon un mode particulier de réalisation de l'invention;
- La figure 4 illustre une procédure de contrôle d'accès à un terminal selon un autre mode particulier de réalisation de l'invention;
- La figure 5 représente une montre connectée disposant de moyens de restitution haptiques et un terminal mobile mettant en œuvre le procédé de contrôle d'accès selon un mode particulier de réalisation.
- La figure 6 illustre l'architecture d'un dispositif mettant en œuvre le procédé de contrôle d'accès selon un mode particulier de réalisation de l'invention.

### DESCRIPTION D'UN MODE PARTICULIER DE RÉALISATION

La description suivante utilise comme support un terminal mobile comprenant un écran tactile et une surface de restitution haptique adaptée pour simuler une texture lors d'un contact avec une partie du corps. Dans le cas illustré ici, l'écran tactile est aussi la surface de restitution haptique. Dans un autre mode de réalisation, les deux surfaces peuvent êtres différentes, par exemple la surface de restitution haptique peut être au dos du terminal. De même, le cas illustré ici représente un terminal de communication, toutefois l'invention peut être mise en œuvre sur différents types d'équipements pouvant intégrer un système de contrôle d'accès et des moyens de retour haptiques. Il peut s'agir par exemple et de façon non limitative d'un ordinateur, d'une serrure électronique, d'une montre connectée ou encore d'un distributeur automatique bancaire.

Le retour haptique peut par exemple être mis en œuvre par le procédé décrit dans le document US 7982588 B2. Toutefois, d'autres technologies de restitution haptique peuvent être utilisées pour mettre en œuvre l'invention, comme par exemple et de façon non exhaustive, des techniques de retour vibro-tactile comme celles développées par la société Immersion Corporation™, ou encore des techniques de déformation d'écran telles que celles développées par la société Tactus Technology™ Inc. D'une manière générale, toute technologie permettant de procurer des sensations tactiles variées peut être utilisée pour mettre en œuvre l'invention.

Le terminal comprend également un écran tactile permettant de détecter des gestes effectués par l'utilisateur, comme par exemple des déplacements d'un ou plusieurs doigts sur l'écran. Dans un mode de réalisation préféré, la surface de restitution haptique est combinée avec l'écran tactile de façon à obtenir un écran tactile à retour haptique. Toutefois, selon d'autres modes de réalisation, les moyens de restitution haptiques peuvent ne pas être combinés avec un écran. L'invention peut également être mise en œuvre sur un terminal ne disposant pas d'écran.

Lors d'une étape préalable, l'utilisateur associe des gestes à des signaux haptiques. Pour cela, le terminal restitue un signal haptique, par exemple une texture, et invite l'utilisateur à toucher la surface de restitution afin d'appréhender la texture et de prendre connaissance de ses caractéristiques. Le terminal peut ensuite proposer à l'utilisateur d'enregistrer un geste de réponse associé à cette texture. Selon un mode de réalisation particulier, le terminal propose un ensemble prédéfini de gestes pouvant être associé à la texture, comme par exemple des déplacements dans des directions prédéfinies. Selon un autre mode de réalisation, l'utilisateur est libre d'associer le motif de son choix qu'il décrit par exemple en déplaçant son doigt sur l'écran. Selon un mode de réalisation particulier, une texture peut être écartée lorsque l'utilisateur juge qu'elle n'est pas suffisamment caractérisée pour pouvoir être identifiée de manière formelle. Selon un autre mode de réalisation particulier, le terminal affiche sur l'écran une image représentant graphiquement les caractéristiques de la texture de manière à fournir un indice visuel à l'utilisateur lors de l'enregistrement du geste de réponse.

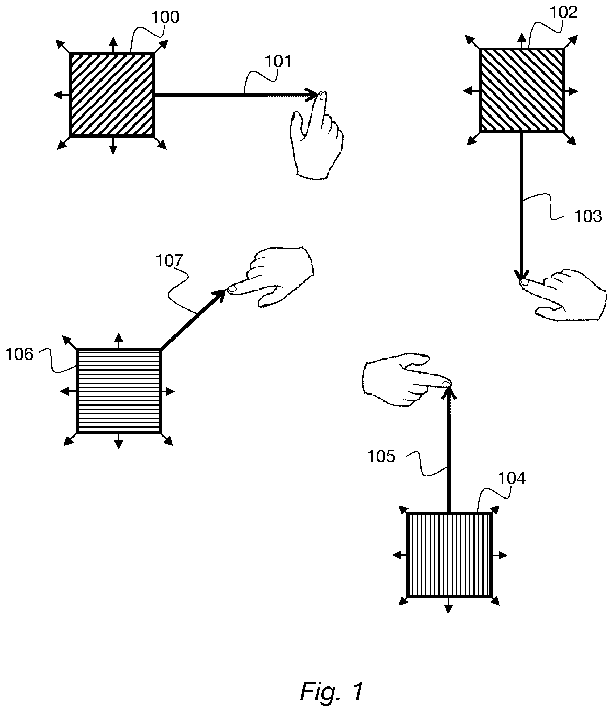

La figure 1 illustre des exemples d'associations entre des textures et des gestes pour le déverrouillage d'un terminal selon un mode de réalisation de la présente invention. Dans cet exemple, le terminal propose à l'utilisateur d'associer un déplacement dans une direction particulière à chacune des textures présentées :
- la texture 100 est associée au geste 101 correspondant à un déplacement du doigt vers la droite ;
- la texture 102 est associée au geste 103 correspondant à un déplacement du doigt vers le bas ;
- la texture 104 est associée au geste 105 correspondant à un déplacement du doigt vers le haut ; et
- la texture 106 est associée au geste 107 correspondant à un déplacement du doigt selon une diagonale supérieure droite.

Dans cet exemple, le geste correspond à un déplacement dans une direction parmi huit directions possibles. Dans un autre mode de réalisation, des gestes plus complexes peuvent être associés aux textures, comme par exemple un cercle, un carré, un cœur, ou n'importe quel motif pouvant être reproduit sur la surface tactile en réponse à la présentation d'une texture particulière.

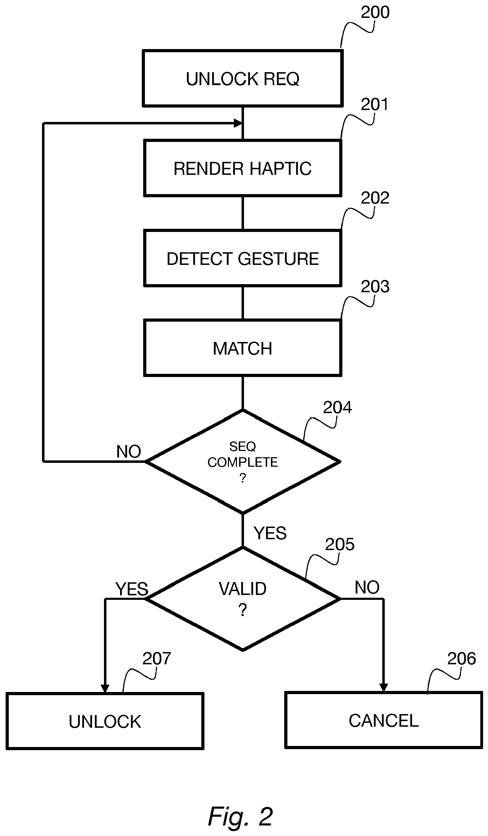

La figure 2 illustre les principales étapes du procédé de contrôle d'accès selon un mode de réalisation particulier de la présente invention.

Lors d'une première étape 200, le terminal obtient une demande d'accès. Cette demande est obtenue par exemple suite à une action de l'utilisateur sur le terminal lorsqu'il souhaite accéder à des fonctions ou contenus protégés alors que le terminal se trouve dans un état verrouillé. Le terminal peut alors afficher sur l'écran un message invitant l'utilisateur à exécuter la procédure de déverrouillage en déplaçant un doigt sur l'écran. Dans un mode de réalisation particulier, le terminal affiche un point de départ et une direction pour ce geste initial.

À l'étape 201, le terminal restitue un signal haptique en présentant par exemple une texture sur la surface de restitution haptique et invite l'utilisateur à effectuer le geste ayant été associé au préalable à cette texture. La texture peut être présentée sur la totalité de la surface de restitution ou bien uniquement sur une zone prédéfinie, comme par exemple sur la zone en contact avec le doigt de l'utilisateur, de façon à ce que ce dernier puisse percevoir et identifier la texture présentée.

Lorsque l'utilisateur identifie la texture, il effectue le geste qui lui est associé, par exemple un déplacement dans une direction particulière.

Lors d'une étape 202, le terminal détecte le geste effectué par l'utilisateur en réponse à la texture présentée. La détection se fait par exemple par l'intermédiaire de l'écran tactile du terminal. Selon un autre mode de réalisation, la détection du geste peut être réalisée par un dispositif tactile distinct de l'écran, comme par exemple un trackpad d'ordinateur portable. Selon un autre mode de réalisation, la détection du geste peut être réalisée par un dispositif distinct de la surface de restitution haptique, comme par exemple un capteur de mouvement porté (accéléromètre, gyroscope) ou encore une caméra.

Lors de l'étape 203, le geste de réponse est ensuite comparé au geste préalablement associé à la texture présentée pour déterminer la validité de la réponse apportée par l'utilisateur. Le terminal mémorise alors temporairement une information de validité résultant de la comparaison de façon à ne pas informer immédiatement l'utilisateur d'une éventuelle erreur.

Selon un mode de réalisation particulier, le terminal réitère les étapes 201, 202 et 203 afin d'augmenter la fiabilité du contrôle d'accès. Pour cela, le terminal comptabilise le nombre de textures présentées lors d'une procédure de déverrouillage et le compare lors d'une étape 204 à un nombre de présentations prédéfini. Ainsi, le terminal renouvèle les étapes 201, 202 et 203 tant que le nombre de présentations est inférieur à un nombre de présentations prédéfini.

Lorsque le nombre de présentations prédéfini est atteint, le terminal contrôle la validité de l'accès à l'étape 205. Pour cela, le terminal vérifie que les gestes apportés par l'utilisateur en réponse aux textures présentées correspondent bien aux gestes associés préalablement à ces textures en utilisant par exemple l'information de validité mémorisée à l'étape 203. Ainsi, lorsque les gestes effectués par l'utilisateur en réponse aux textures présentées et les gestes associés préalablement à ces textures correspondent, le terminal peut être déverrouillé à l'étape 207. En revanche, si au moins une réponse à une texture présentée ne correspond pas au geste associé préalablement, l'accès au terminal est refusé lors de l'étape 206.

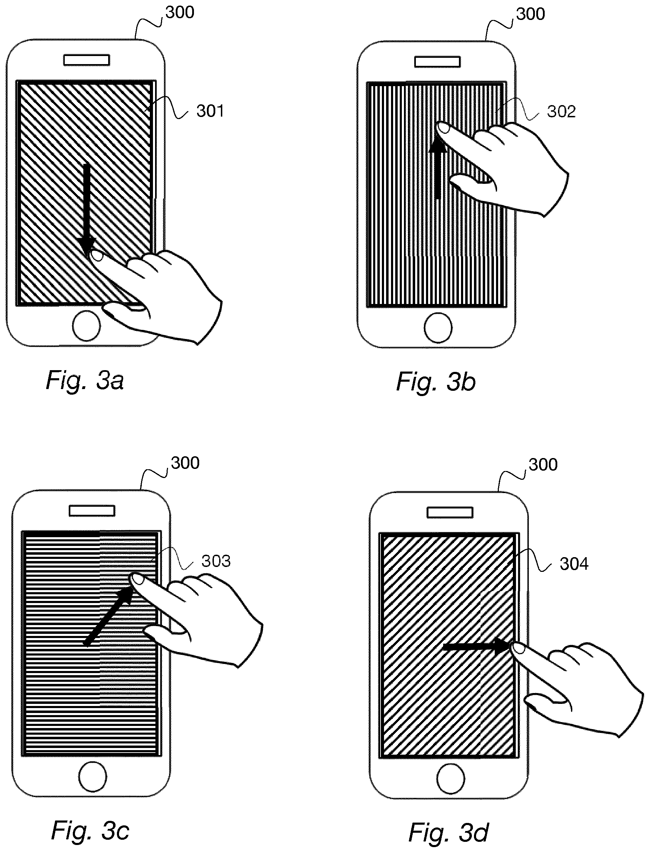

Les figures 3a, 3b, 3c et 3d illustrent une procédure de déverrouillage d'un terminal selon un mode particulier de réalisation de l'invention. Ces figures représentent un terminal 300 équipé d'un écran tactile à retour haptique apte à restituer une texture sur la totalité de la surface tactile. L'utilisateur du terminal a associé au préalable des gestes et des textures, en suivant par exemple les associations décrites en référence à la figure 1. Sur la figure 3a, le terminal présente une texture 301 sur la totalité de la surface haptique à laquelle l'utilisateur répond correctement en effectuant sur l'écran tactile un déplacement du doigt vers le bas. Sur la figure 3b, le terminal présente une nouvelle texture 302 sur la totalité de la surface haptique. L'utilisateur y répond correctement en effectuant un déplacement du doigt vers le haut. Sur la figure 3c, le terminal présente une nouvelle texture 303 sur la totalité de la surface haptique. L'utilisateur y répond correctement en effectuant un déplacement vers le coin supérieur droit. Le terminal présente alors une texture 304 à laquelle l'utilisateur répond par le geste associé, soit un déplacement vers la droite. L'utilisateur a ainsi démontré qu'il connaissait les gestes associés aux différentes textures présentées et le terminal peut lui octroyer l'accès à toutes les fonctionnalités.

Par souci de clarté, les différentes textures sont visuellement identifiables sur les figures 3a, 3b, 3c et 3d. Toutefois, dans un mode de réalisation préféré, les textures présentées sur le terminal ne sont identifiables que par une perception tactile du signal haptique restitué.

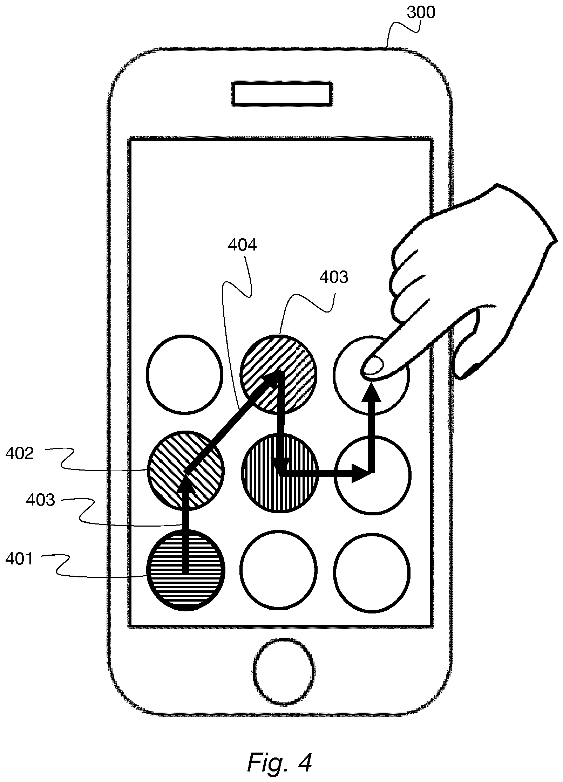

La figure 4 illustre une procédure de déverrouillage d'un terminal 300 selon un mode de réalisation particulier. Dans cet exemple, le terminal affiche une matrice composée de 9 éléments dont le but est de servir de guide aux déplacements du doigt de l'utilisateur. L'utilisateur du terminal a associé au préalable des gestes à des signaux haptiques, en suivant par exemple les associations décrites en référence à la figure 1.

Lorsque l'utilisateur appose un doigt sur un des emplacements de la matrice, par exemple l'emplacement 401, le terminal restitue un premier signal haptique selon l'étape 201 décrite en référence à la figure 2. Par exemple, le terminal restitue la texture 106 de la figure 1 et invite l'utilisateur à déplacer son doigt vers un autre emplacement de la matrice afin qu'il puisse ressentir la texture présentée pendant ce déplacement. Dans cet exemple, ce premier déplacement n'est pas réalisé en réponse au signal haptique restitué, son but étant de permettre à l'utilisateur de percevoir la texture restituée. L'utilisateur effectue alors un déplacement 403 vers l'emplacement 402. Durant ce déplacement 403, l'utilisateur perçoit et identifie le signal haptique 106 présenté par le terminal. Lorsque le déplacement 403 aboutit à l'emplacement 402, le terminal restitue une nouvelle texture, par exemple la texture 103 représentée sur la figure 1 et débute selon l'étape 202 du procédé la détection du geste de réponse à la texture 106 présentée précédemment. L'utilisateur effectue alors un déplacement 404 en réponse à la texture 106 ressentie lors du déplacement 403 précédent. Lorsque le déplacement 404 aboutit à l'emplacement 403, le terminal valide, selon l'étape 203 du procédé, le déplacement 404 effectué en réponse à la présentation de la texture 106. Une nouvelle texture est alors présentée alors que l'utilisateur effectue un déplacement en réponse à la texture ressentie lors du déplacement 404. Dans cet exemple, l'utilisateur doit effectuer 4 déplacements en réponse aux 4 signaux haptiques présentés avant de se voir ou non autoriser l'accès lors de l'étape 207 du procédé.

Ce mode de réalisation permet ainsi l'utilisateur de répondre rapidement à une séquence de signaux haptiques présentés par le terminal sans lever le doigt de la surface tactile.

Chaque signal haptique présenté dans la séquence est choisi par le terminal en fonction du geste qui lui est associé, de façon à ce qu'aucun déplacement vers l'extérieur de la surface tactile ne soit requis pour exécuter la procédure de déverrouillage. Ainsi, lorsque le geste associé à un signal haptique sélectionné aléatoirement nécessite un déplacement hors de la surface tactile, le terminal peut sélectionner un autre signal haptique en remplacement.

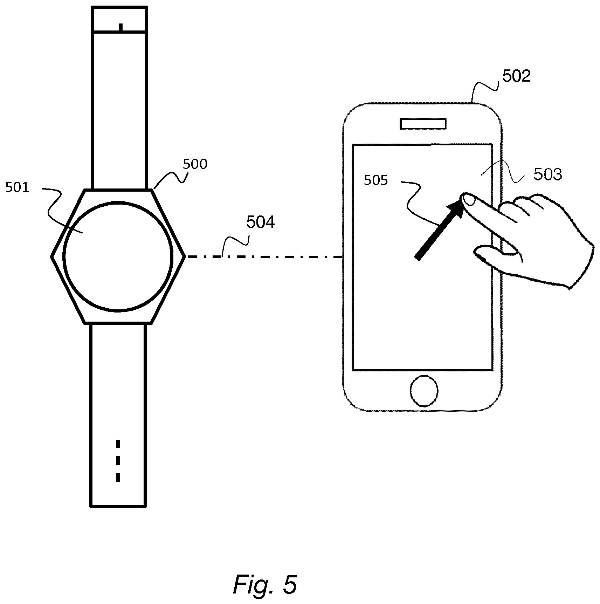

La figure 5 représente un dispositif portable 500 disposant de moyens de restitution haptiques 501. Il s'agit par exemple d'une montre connectée disposant d'une interface Bluetooth et de moyens de restitution vibro-tactiles aptes à transmettre des sensations tactiles à son porteur. Les moyens de restitution haptiques 501 sont adaptés pour recevoir des commandes de restitution d'un signal haptique reçu par l'intermédiaire d'une connexion Bluetooth 504. La figure 5 représente également un terminal mobile 502 mettant en œuvre le procédé de contrôle d'accès. Il s'agit par exemple d'un terminal mobile de type smartphone doté d'un écran tactile 503 et d'une interface Bluetooth apte à transmettre des commandes de restitution haptique vers la montre connectée 500 par l'intermédiaire de la connexion Bluetooth 504. L'écran tactile 503 est configuré pour détecter des gestes de réponse à un signal haptique dont la restitution a été commandée à la montre 500. Les gestes de réponse peuvent correspondre par exemple à un déplacement rectiligne d'un contact avec l'écran dans une direction prédéfinie, comme par exemple le déplacement 505. Ainsi, lorsqu'une demande d'accès est obtenue par le terminal, une commande de restitution d'un signal haptique est transmise à la montre et communiquée à son porteur par l'intermédiaire d'une sensation tactile, comme par exemple une séquence vibratoire particulière. Afin d'accéder aux fonctionnalités du terminal, l'utilisateur effectue sur la surface tactile du terminal le geste préalablement associé au signal haptique restitué. Lorsque le terminal obtient l'information de détection du geste, il effectue une comparaison avec le geste préalablement associé au signal haptique dont il a commandé la restitution à la montre et, si les gestes correspondent, autorise l'accès aux fonctionnalités du terminal à l'utilisateur.

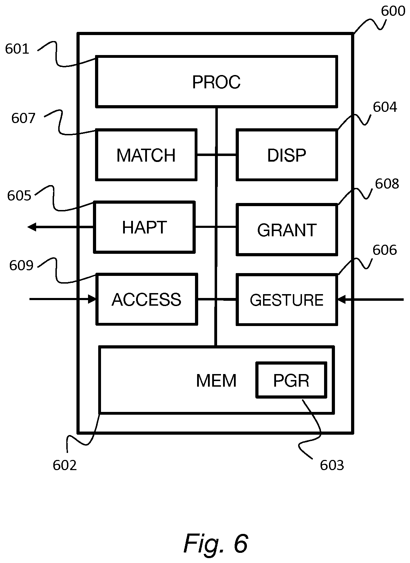

La figure 6 illustre un dispositif 600 mettant en œuvre le procédé de contrôle d'accès selon un mode particulier de réalisation de l'invention. Le dispositif comprend un espace de stockage 602, par exemple une mémoire MEM, une unité de traitement 601 équipée par exemple d'un processeur PROC. L'unité de traitement peut être pilotée par un programme 603, par exemple un programme d'ordinateur PGR, mettant en œuvre le procédé de contrôle d'accès tel que décrit dans l'invention en référence à la figure 2, et notamment les étapes d'obtention d'une demande d'accès, de commande de restitution d'un signal haptique, d'obtention d'information de détection d'un geste de réponse audit signal, de validation du geste de réponse lorsque le geste détecté correspond à un geste préalablement associé au signal haptique restitué, et d'autorisation de l'accès suite à la validation dudit geste. La mémoire 602 enregistre par exemple les associations préalablement définies entre les signaux haptiques et les gestes.

À l'initialisation, les instructions du programme d'ordinateur 603 sont par exemple chargées dans une mémoire RAM (Random Access Memory en anglais) avant d'être exécutées par le processeur de l'unité de traitement 601. Le processeur de l'unité de traitement 601 met en œuvre les étapes du procédé de contrôle d'accès selon les instructions du programme d'ordinateur 603.

Pour cela, le dispositif comprend, outre la mémoire 602, des moyens de commande de restitution haptique 605 (HAPT) permettant au dispositif de commander la restitution d'un signal haptique particulier, comme par exemple une texture. La commande de restitution d'un signal haptique peut être par exemple acheminée vers les moyens de restitution haptiques par l'intermédiaire d'une interface WIFI, Ethernet, bluetooth, d'une connexion filaire ou encore d'une connexion à un bus de communication associé à l'unité de traitement. Ces moyens de restitution haptique peuvent correspondre par exemple à des moyens de retour vibro-tactiles. Le dispositif comprend également des moyens d'obtention 606 (GESTURE) d'information de détection d'un geste de réponse à un signal haptique qui peuvent être par exemple une interface WIFI, Ethernet, Bluetooth, une connexion filaire ou encore une connexion à un bus de communication de l'unité de traitement 601. Les moyens de détection d'un geste de réponse peuvent correspondre à une surface tactile, comme par exemple un écran tactile, à des capteurs inertiels tels que par exemple des accéléromètres ou gyroscopes ou encore des capteurs d'images comme par exemple une caméra vidéo. Le dispositif comprend en outre une unité de comparaison 607 (MATCH) adaptée pour comparer un geste effectué par l'utilisateur en réponse à un signal haptique avec un geste enregistré au préalable et une unité d'autorisation d'accès 608 (GRANT) adaptée pour donner accès au terminal à un utilisateur lorsque les gestes effectués en réponse aux signaux haptiques restitués correspondent aux gestes associés au préalable aux signaux. Les moyens de commande de restitution haptique 605 et les moyens d'obtention d'une information de détection d'un geste 606 de réponse permettent aux moyens de comparaison 607 de contrôler la validité d'un geste exécuté par un utilisateur en réponse à un signal haptique présenté.

Selon un mode particulier de réalisation de l'invention, le dispositif comprend en outre des moyens d'affichage 604 (DISP) tels que par exemple un écran permettant par exemple d'afficher un indice visuel représentatif d'un signal haptique restitué.

Selon une réalisation particulière, des moyens de restitution d'au moins un signal haptique et/ou des moyens de détection d'un geste de réponse audit signal haptique sont intégrés au dispositif et connectés à un bus de communication associé à l'unité de traitement 601.

Selon un autre mode de réalisation particulier, le dispositif peut être intégré dans un terminal à écran tactile de type téléphone mobile ou tablette dont l'écran tactile peut être combiné avec les moyens de retour haptiques.

Selon un mode de réalisation particulier, le dispositif peut être intégré dans un ordinateur personnel en combinant par exemple les moyens de retour haptiques aptes à recevoir une commande de restitution d'un signal haptique avec un dispositif de pointage de type trackpad ou souris.

Selon un mode de réalisation particulier, le dispositif peut être intégré dans une montre connectée dotée par exemple d'une zone tactile apte à transmettre une information de détection d'un geste de réponse, comme par exemple un déplacement d'un contact sur la surface, et de moyens de restitutions haptiques adaptés pour transmettre des sensations au poignet du porteur et pour recevoir une commande de restitution d'un signal haptique particulier.

Selon un mode de réalisation particulier, des moyens de restitution de signaux haptiques aptes à recevoir une commande de restitution peuvent être compris sur la face inférieure d'une montre connectée et peuvent communiquer avec le dispositif par l'intermédiaire d'une connexion bluetooth.

Selon une réalisation particulière, les gestes de réponse à la présentation d'un signal haptique peuvent être détectés par un capteur porté apte à transmettre une information de détection d'un geste de réponse, comme par exemple un dispositif externe comprenant des capteurs inertiels, communiquant avec le dispositif par l'intermédiaire d'une connexion bluetooth.

Selon un autre mode de réalisation, le dispositif peut être combiné à une commande de serrure électrique disposant d'une zone tactile apte à transmettre une information de détection d'un geste de réponse et de moyens de retour haptique aptes à recevoir une commande de restitution d'un signal haptique afin de contrôler par exemple l'accès à un local ou un coffre-fort.

Selon un autre mode de réalisation, le dispositif peut être intégré à un distributeur automatique bancaire disposant d'une zone tactile apte à transmettre une information de détection d'un geste de réponse et de moyens de retour haptique aptes à recevoir une commande de restitution.

## Revendications

1. Procédé de contrôle d'accès sur un équipement lié à des moyens de restitution d'au moins un signal haptique sur une surface de restitution haptique, le signal haptique étant une texture discernable au toucher, le procédé comportant, suite à l'obtention d'une demande d'accès, les étapes suivantes :
- Sélection d'un signal haptique parmi une pluralité de signaux haptiques, un signal haptique étant préalablement associé à un geste réalisé par déplacement d'un contact avec une surface tactile de l'équipement, le signal haptique étant sélectionné en fonction du geste qui lui est associé,
- Commande de restitution (201) du signal haptique,
- Obtention d'information de détection d'un geste (202) de réponse audit signal,
- Validation (203) du geste de réponse lorsque le geste détecté correspond à un geste préalablement associé au signal haptique restitué, et
- Autorisation de l'accès (207) suite à la validation dudit geste,
**caractérisé en ce que**
le signal haptique est sélectionné de façon telle qu'aucun déplacement hors de la surface tactile ne soit requis pour exécuter le geste associé à partir d'un emplacement prédéterminé, un autre signal haptique étant sélectionné si le cas se présente, **en ce que** les étapes de restitution, détection et validation sont répétées pour une séquence de signaux haptiques et **en ce que** l'étape d'autorisation de l'accès est déclenchée suite à la validation du geste de réponse au dernier signal haptique de la séquence.

2. Procédé selon la revendication 1 **caractérisé en ce que** le geste associé au signal haptique est un déplacement rectiligne d'un contact avec une surface tactile de l'équipement dans une direction prédéfinie.

3. Procédé selon l'une des revendications 1 à 2 **caractérisé en ce qu'**un indice visuel représentatif du signal haptique restitué est affiché sur un écran de l'équipement

4. Dispositif de contrôle d'accès **caractérisé en ce qu'**il est lié à des moyens de restitution d'au moins un signal haptique, le signal haptique étant une texture discernable au toucher, le dispositif comportant des moyens de :
- Obtention d'une demande d'accès (509),
- Sélection d'un signal haptique parmi une pluralité de signaux haptiques, un signal haptique étant préalablement associé à un geste réalisé par déplacement d'un contact avec une surface tactile de l'équipement, le signal haptique étant sélectionné en fonction du geste qui lui est associé,
- Commande de restitution (505) du signal haptique,
- Obtention d'une information de détection d'un geste (506) de réponse audit signal,
- Validation du geste de réponse (507) lorsque le geste détecté correspond à un geste préalablement associé au signal haptique restitué, et
- Autorisation de l'accès (508) suite à la validation dudit geste,
**caractérisé en ce que**
le signal haptique est sélectionné de façon telle qu'aucun déplacement hors de la surface tactile ne soit requis pour exécuter le geste associé à partir d'un emplacement prédéterminé, un autre signal haptique étant sélectionné si le cas se présente, la restitution, la détection et la validation sont aptes à être répétées pour une séquence de signaux haptiques et l'autorisation de l'accès est apte à être déclenchée suite à la validation du geste de réponse au dernier signal haptique de la séquence.

5. Dispositif de contrôle d'accès selon la revendication 4 **caractérisé en ce qu'**il comprend en outre lesdits moyens de restitution d'au moins un signal haptique et des moyens de détection d'un geste de réponse audit signal.

6. Terminal comprenant un dispositif de contrôle d'accès selon l'une des revendications 4 ou 5.

7. Programme d'ordinateur **caractérisé en ce qu'**il comporte des instructions pour l'exécution du procédé selon l'une quelconque des revendications 1 à 3 lorsque le programme est exécuté par un processeur.

8. Support de stockage lisible par un processeur sur lequel est enregistré un programme d'ordinateur comprenant des instructions pour l'exécution des étapes du procédé de contrôle d'accès selon les revendications 1 à 3.

## Patentansprüche

1. Verfahren zur Zugangskontrolle für ein Gerät, welches an Mittel zur Wiedergabe wenigstens eines haptischen Signals auf einer Fläche zur haptischen Wiedergabe gebunden ist, wobei das haptische Signal eine beim Berühren erkennbare Textur ist, wobei das Verfahren, im Anschluss an das Erhalten einer Zugangsanforderung, die folgenden Schritte umfasst:
- Auswahl eines haptischen Signals aus mehreren haptischen Signalen, wobei ein haptisches Signal zuvor einer Geste zugeordnet wird, die durch Verschiebung eines Kontakts mit einer berührungsempfindlichen Fläche des Geräts ausgeführt wird, wobei das haptische Signal in Abhängigkeit von der Geste, welche ihm zugeordnet ist, ausgewählt wird,
- Steuerung der Wiedergabe (201) des haptischen Signals,
- Gewinnung von Informationen über die Erkennung einer Antwortgeste (202) auf das Signal,
- Validierung (203) der Antwortgeste, wenn die erkannte Geste einer Geste entspricht, die dem wiedergegebenen haptischen Signal zuvor zugeordnet wurde, und
- Autorisierung des Zugangs (207) im Anschluss an die Validierung der Geste,
**dadurch gekennzeichnet, dass** das haptische Signal derart ausgewählt wird, dass keine Verschiebung aus der berührungsempfindlichen Fläche hinaus erforderlich ist, um die zugeordnete Geste von einer vorbestimmten Stelle aus auszuführen, wobei ein anderes haptisches Signal ausgewählt wird, wenn ein solcher Fall eintritt,
dadurch, dass die Schritte der Wiedergabe, Erkennung und Validierung für eine Folge von haptischen Signalen wiederholt werden, und dadurch, dass der Schritt der Autorisierung des Zugangs im Anschluss an die Validierung der Antwortgeste auf das letzte haptische Signal der Folge ausgelöst wird.

2. Verfahren nach Anspruch 1, **dadurch gekennzeichnet, dass** die dem haptischen Signal zugeordnete Geste eine geradlinige Verschiebung eines Kontakts mit einer berührungsempfindlichen Fläche des Geräts in einer vordefinierten Richtung ist.

3. Verfahren nach einem der Ansprüche 1 bis 2, **dadurch gekennzeichnet, dass** ein visueller Hinweis, der für das wiedergegebene haptische Signal repräsentativ ist, auf einem Bildschirm des Geräts angezeigt wird.

4. Vorrichtung zur Zugangskontrolle, **dadurch gekennzeichnet, dass** sie an Mittel zur Wiedergabe wenigstens eines haptischen Signals gebunden ist, wobei das haptische Signal eine beim Berühren erkennbare Textur ist, wobei die Vorrichtung Mittel aufweist:
- zum Erhalten einer Zugangsanforderung (509),
- zur Auswahl eines haptischen Signals aus mehreren haptischen Signalen, wobei ein haptisches Signal zuvor einer Geste zugeordnet wird, die durch Verschiebung eines Kontakts mit einer berührungsempfindlichen Fläche des Geräts ausgeführt wird, wobei das haptische Signal in Abhängigkeit von der Geste, welche ihm zugeordnet ist, ausgewählt wird,
- zur Steuerung der Wiedergabe (505) des haptischen Signals,
- zur Gewinnung einer Information über die Erkennung einer Antwortgeste (506) auf das Signal,
- zur Validierung der Antwortgeste (507), wenn die erkannte Geste einer Geste entspricht, die dem wiedergegebenen haptischen Signal zuvor zugeordnet wurde, und
- zur Autorisierung des Zugangs (508) im Anschluss an die Validierung der Geste,
**dadurch gekennzeichnet, dass** das haptische Signal derart ausgewählt wird, dass keine Verschiebung aus der berührungsempfindlichen Fläche hinaus erforderlich ist, um die zugeordnete Geste von einer vorbestimmten Stelle aus auszuführen, wobei ein anderes haptisches Signal ausgewählt wird, wenn ein solcher Fall eintritt, wobei die Wiedergabe, die Erkennung und die Validierung für eine Folge von haptischen Signalen wiederholt werden können und die Autorisierung des Zugangs im Anschluss an die Validierung der Antwortgeste auf das letzte haptische Signal der Folge ausgelöst werden kann.

5. Vorrichtung zur Zugangskontrolle nach Anspruch 4, **dadurch gekennzeichnet, dass** sie außerdem die Mittel zur Wiedergabe wenigstens eines haptischen Signals und Mittel zur Erkennung einer Antwortgeste auf das Signal umfasst.

6. Endgerät, welches eine Vorrichtung zur Zugangskontrolle nach einem der Ansprüche 4 oder 5 umfasst.

7. Computerprogramm, **dadurch gekennzeichnet, dass** es Anweisungen zur Ausführung des Verfahrens nach einem der Ansprüche 1 bis 3, wenn das Programm von einem Prozessor ausgeführt wird, umfasst.

8. Speichermedium, das von einem Prozessor lesbar ist und auf welchem ein Computerprogramm aufgezeichnet ist, das Anweisungen zur Ausführung der Schritte des Verfahrens zur Zugangskontrolle nach den Ansprüchen 1 bis 3 umfasst.

## Claims

1. Method for access control to equipment linked to means for rendering at least one haptic signal on a haptic rendering surface, the haptic signal being a touch-discernible texture, the method comprising, following the receipt of an access request, the following steps:
- selection of a haptic signal from among a plurality of haptic signals, a haptic signal being previously associated with a gesture performed by movement of a contact with a touch-sensitive surface of the equipment, the haptic signal being selected according to the gesture which is associated with it,
- command (201) to render the haptic signal,
- receipt of information on detection of a gesture (202) of response to said signal,
- validation (203) of the response gesture when the detected gesture corresponds to a gesture previously associated with the rendered haptic signal, and
- authorisation of access (207) following the validation of said gesture,
**characterized in that**
the haptic signal is selected in such a way that no movement out of the touch-sensitive surface is required to execute the associated gesture from a predetermined location, another haptic signal being selected should the case arise,
**in that** the rendering, detection and validation steps are repeated for a sequence of haptic signals and **in that** the step of authorisation of the access is triggered following the validation of the gesture of response to the last haptic signal of the sequence.

2. Method according to Claim 1, **characterized in that** the gesture associated with the haptic signal is a straight-line movement of a contact with a touch-sensitive surface of the equipment in a predefined direction.

3. Method according to one of Claims 1 and 2, **characterized in that** a visual index representative of the rendered haptic signal is displayed on a screen of the equipment.

4. Access control device, **characterized in that** it is linked to means for rendering at least one haptic signal, the haptic signal being a touch-discernible texture, the device comprising means for:
- receiving an access request (509),
- selecting a haptic signal from among a plurality of haptic signals, a haptic signal being previously associated with a gesture performed by movement of a contact with a touch-sensitive surface of the equipment, the haptic signal being selected according to the gesture which is associated with it,
- commanding the rendering (505) of the haptic signal,
- receiving information on detection of a gesture (506) of response to said signal,
- validating the response gesture (507) when the detected gesture corresponds to a gesture previously associated with the rendered haptic signal, and
- authorising access (508) following the validation of said gesture,
**characterized in that**
the haptic signal is selected in such a way that no movement out of the touch-sensitive surface is required to execute the associated gesture from a predetermined location, another haptic signal being selected should the case arise, the rendering, the detection and the validation can be repeated for a sequence of haptic signals and the authorisation of access is able to be triggered following the validation of the gesture of response to the last haptic signal of the sequence.

5. Access control device according to Claim 4, **characterized in that** it also comprises said means for rendering at least one haptic signal and means for detecting a gesture of response to said signal.

6. Terminal comprising an access control device according to one of Claims 4 or 5.

7. Computer program, **characterized in that** it comprises instructions for executing the method according to any one of Claims 1 to 3 when the program is run by a processor.

8. Processor-readable storage medium, on which is stored a computer program comprising instructions for executing the steps of the access control method according to Claims 1 to 3.
